# EUROPEAN PATENT APPLICATION

(11) **EP 4 374 962 A1**
(43) Date of publication of application: **29.05.2024**
(21) Application number: 22846097.8
(22) Date of filing: 06.07.2022
(51) Int. Cl.: B01J 37/02, B01J 37/04, B01J 37/08, B01J 23/755, B01J 21/08, B01J 35/00

(54) **HIGHLY ACTIVE DRY REFORMING CATALYST, AND PREPRATION METHOD THEREOF**

(30) Priority: 21.07.2021 KR 20210095780; 05.07.2022 KR 20220082458
(71) Applicant: Hanwha TotalEnergies Petrochemical Co., Ltd., Seosan-si, Chungcheongnam-do 31900 (KR)
(72) Inventor: KANG, Sung Bong, Gwangju 61005 (KR); MIN, Hae Hyun, Gwangju 61005 (KR)
(74) Representative: Nordic Patent Service A/S
(86) International application number: PCT/KR2022/009732
(87) International publication number: WO 2023/003225

(57) **Abstract**

Disclosed are a dry reforming catalyst having high activity and long-term stability, and a method for preparing the dry reforming catalyst. A sol-gel reaction is performed at the interface of a catalyst for sol-gel reaction in the form of micelles to form silica particles having pores. In addition, catalyst particles of nickel or nickel oxide are formed in voids or pores of silica by using the difference in solubility in a gel state of the silica.

## Description

### TECHNICAL FIELD

The present invention relates to a dry reforming catalyst and a method of preparing the same, and more particularly, to a highly active dry reforming catalyst with long-term stability and a method for preparing the same.

### BACKGROUND ART

When the concentration of carbon dioxide in the atmosphere increases, various problems arise, so that research on the conversion of carbon dioxide into other materials has been actively conducted. Among them, a dry reforming reaction of methane is a reaction that produces hydrogen and carbon monoxide by reacting carbon dioxide and methane at a high temperature in the presence of a catalyst. A synthesis gas produced through the above reaction can be applied to a reaction for synthesizing various chemicals or hydrocarbons, and thus, is known to have a very high added value. However, the dry reforming reaction of methane has not been put into practical use due to the instability and low activity of the catalyst.

The instability of the catalyst in the dry reforming reaction is caused in that the catalyst vaporizes and is lost due to the reaction at a high temperature of 600 °C or higher.

In addition, activity decreases during long-term use, which is caused by accelerated deactivation due to aggregation of catalyst metals at a high temperature, or due to carbon deposition in the catalyst. Alternatively, it is caused by a decrease in active sites of the catalyst due to poisoning by other poisonous materials.

In the case of Ni catalysts that have been commercialized or are under consideration for commercialization, a process is being developed which seals at least some of active sites on the surface of Ni with sulfur to prevent carbon deposition, but this requires a complex process that requires additional expensive metal precursors or other additives. Nevertheless, Ni catalysts used in a dry reforming reaction have problems with low activity and long-term stability.

### DISCLOSURE OF THE INVENTION

### TECHNICAL PROBLEM

The first technical objective to be achieved by the present invention is to provide a dry reforming catalyst in which catalyst particles are immobilized through metal oxide bonds in a three-dimensional silica matrix.

The second technical objective to be achieved by the present invention is to provide a method for preparing the dry reforming catalyst to achieve the first technical objective.

### TECHNICAL SOLUTION

In order to achieve the above-described first technical objective, the present invention provides a dry reforming catalyst including silica having a three-dimensional network structure with pores formed therein; and catalyst particles for reforming methane, which are formed in the pores and have a smaller diameter than the pores.

In order to achieve the above-described second technical objective, the present invention provides a method for preparing the dry reforming catalyst, the method including preparing a first precursor solution in which a catalyst for sol-gel reaction, a nickel precursor, and water are mixed, and the catalyst for sol-gel reaction floats in the form of drops or micelles; adding a silane precursor solution to the first precursor solution to form a silica solution in which silica particles of a network structure are formed; removing water from the silica solution to form silica gel, and adding a second precursor solution dropwise to the silica gel to form a nickel-silica solution in which nickel particles are formed in the silica particles of a network structure.

### ADVANTAGEOUS EFFECTS

According to the present invention described above, the catalyst particles are formed for dry reforming of methane. The catalyst particles are formed inside silica, and are formed in nano-sized pores. In a synthesis process, nickel atoms supplied from a precursor are covalently bonded to oxygen atoms of silica produced through a sol-gel reaction. In addition, in a subsequent process, nickel is precipitated in a covalent bond site of nickel-oxygen by the difference in solubility. In addition, when a firing process is performed, the nickel metal may be partially oxidized on the surface, forming the catalyst particles of nickel or nickel oxide. The catalyst particles formed in pores inside the silica having a relatively high density and a predetermined pore size may ensure long-term stability in a dry reforming reaction of methane, and may maintain a high conversion rate.

### BRIEF DESCRIPTION OF THE DRAWINGS

FIG. 1 is a flowchart for describing a method for preparing a dry reforming catalyst of the present invention.
FIG. 2 are images illustrating a dry reforming catalyst according to Preparation Example 1 of the present invention.
FIG. 3 is a TEM image and an EDX image of the dry reforming catalyst according to Preparation Example 1 of the present invention.
FIG. 4 is a distribution diagram illustrating the size of nickel or nickel oxide in the dry reforming catalyst disclosed in FIG. 2.
FIG. 5 are images showing a powder phase of Comparative Preparation Example 1.
FIG. 6 is a graph illustrating XRD patterns of dry reforming catalysts according to Preparation Example 1 and Comparative Preparation Example 1 of the present invention.
FIG. 7 are images illustrating a powder phase of Comparative Preparation Example 2.
FIG. 8 are images illustrating a powder phase of Comparative Preparation Example 3.
FIG. 9 is a graph illustrating the size distribution of nickel or nickel oxide in the powder phase disclosed in FIG. 8.
FIG. 10 are images illustrating a powder phase of Comparative Preparation Example 4.
FIG. 11 are graphs showing the measurement of conversion rates of Preparation Example 1 and Comparative Preparation Example 1 according to Measurement Example 1 of the present invention.
FIG. 12 are graphs illustrating the result of a long-term stability test of a dry reforming catalyst according to Measurement Example 2 of the present invention.
FIG. 13 are TEM images illustrating the result of a long-term stability test of a dry reforming catalyst according to Measurement Example 2 of the present invention.
FIG. 14 is a graph illustrating the result of thermogravimetric analysis of a dry reforming catalyst according to Measurement Example 3 of the present invention.

### BEST MODE FOR CARRYING OUT THE INVENTION

The inventive concept may be modified in many alternate forms, and thus specific embodiments will be exemplified in the drawings and described in detail. It should be understood, however, that it is not intended to limit the inventive concept to the particular forms disclosed, but rather, is intended to cover all modifications, equivalents, and alternatives falling within the spirit and scope of the inventive concept. Like reference numerals are used to refer to like elements in describing each drawing.

Unless otherwise defined, all the terms used herein, including technical or scientific terms, have the same meanings as those commonly understood by those skilled in the art to which the present invention pertains. Terms such as those defined in a dictionary commonly used should be construed as having meanings consistent with meanings in the context of the related art, and should not be construed as having ideal or overly formal meanings unless explicitly defined in the present application.

Hereinafter, preferred embodiments of the present invention will be described in detail with reference to the accompanying drawings.

### Examples

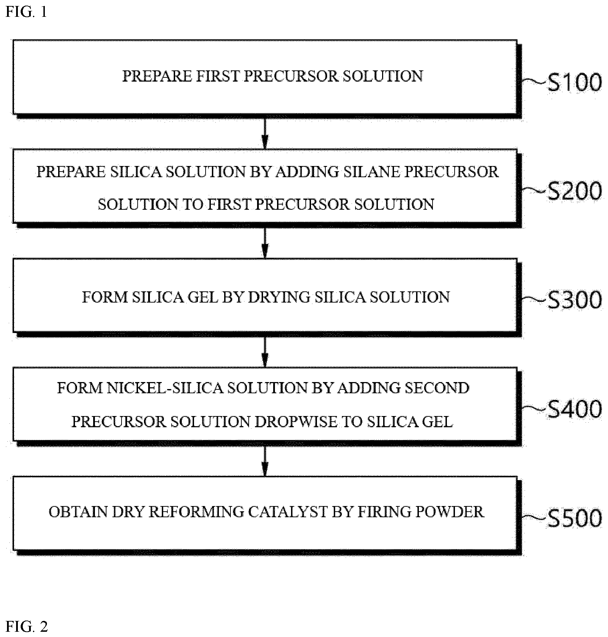

FIG. 1 is a flowchart for describing a method for preparing a dry reforming catalyst of the present invention.

Referring to FIG. 1, a first precursor solution in which a catalyst for sol-gel reaction, a nickel precursor, and water are mixed is prepared (S100). The first precursor solution is a nanoemulsion or microemulsion in which the catalyst for sol-gel reaction is present in the form of drops or micelles in the water. However, the nickel precursor may be dispersed and distributed in droplets or drops of the catalyst for sol-gel reaction, or may be distributed in the water.

The catalyst for sol-gel reaction has properties of hydrophobicity, and preferably has physical properties of a catalyst for sol-gel reaction of silicate. In addition, it is more preferable that the catalyst for sol-gel reaction is a material that can be used as an organic ligand capable of controlling crystal growth of a metal. For example, oleic acid may be used as the catalyst for sol-gel reaction.

In addition, Ni(NO₃)₂·6H₂O is preferably used as the nickel precursor, and deionized water is preferably used as the water.

First, the catalyst for sol-gel reaction and the nickel precursor are mixed, and stirred at about 150 °C to about 250 °C for about 1 minute to about 3 minutes to prepare a preliminary precursor solution. When the temperature during the mixing is lower than about 150 °C, the nickel precursor is not evenly dispersed in the catalyst for sol-gel reaction or Ni ions are not sufficiently formed. In addition, when the temperature during the mixing is higher than about 250 °C, a problem arises in that the volatilization amount of the catalyst for sol-gel reaction increases due to the high temperature.

A container containing the preliminary precursor solution is placed in a bath of about 60 °C to about 90 °C, and water is supplied to the preliminary precursor solution. The water is preferably deionized water. The water is preferably supplied while the preliminary precursor solution is being stirred. Through this, the catalyst for sol-gel reaction having properties of hydrophobicity floats in the form of fine droplets or micelles in the water, and a first precursor solution is formed. The fine droplets or micelles are composed of hydrophobic catalyst for sol-gel reaction, and nickel ions or the nickel precursor is dispersed in the micelles. In addition, nickel ions or the nickel precursor may also be dispersed in water of the nanoemulsion or microemulsion.

Thereafter, a silane precursor solution is added to the first precursor solution to form silica having a three-dimensional network structure, and a silica solution in which silica particles of a three-dimensional network structure are formed in the solution containing water is prepared (S200). The silica of a three-dimensional network structure is formed by a sol-gel reaction, and a silane precursor solution is prepared in advance for the sol-gel reaction.

The silane precursor solution has a silane precursor and a silane coupling agent.

The silane precursor dominantly forms the silica of a three-dimensional network structure by the sol-gel reaction. To this end, the silane precursor is required to have silicon (Si) as a central metal, and an alkoxy group OR (R is an alkyl group) that forms a covalent bond with the silicon. An example of the silane precursor includes tetraethyl orthosilicate (TEOS), methyltrimethoxysilane (MTMS), or tetramethyl orthosilicate (TMOS), and TEOS is preferable.

In addition, the silane coupling agent is required to have silicon disposed as a central metal, and have an alkoxy group that forms a covalent bond with the silicon, and is required to have a structure capable of bonding to a metal or organic molecules as another reactive group bonded to the central metal. The silane coupling agent either chemically bonds to the nickel metal or improves compatibility with the silane precursor, and chemically bonds to the silane precursor.

Therefore, the silane precursor may be formed into silica of a three-dimensional network structure with a relatively even distribution by the silane coupling agent. As the silane coupling agent, amonipropyl triethoxysilane (APTES) is preferable.

When the silane precursor solution is added to the first precursor solution, a sol-gel reaction occurs at the interface of the catalyst for sol-gel reaction. The sol-gel reaction is described as a hydrolysis reaction and a condensation polymerization reaction.

When the silane precursor or silane coupling agent of the silane precursor solution contacts the interface of the catalyst for sol-gel reaction, the following hydrolysis reaction and condensation polymerization reaction occur. Since the silane precursor or the silane coupling agent has an alkoxy silyl group Si-OR (R is an alkyl group), the sol-gel reaction occurs according to the following equations.

[Reaction Equation 1] -Si-OR + H₂O → -Si-OH + ROH

[Reaction Equation 2] -Si-OR + HO-Si- → -Si-O-Si- + ROH

[Reaction Equation 3] -Si-OH + HO-Si → -Si-O-Si- + H₂O

Reaction Equation 1 above is a hydrolysis reaction, and Reaction Equations 2 and 3 represent a condensation polymerization reactions.

Due to the compatibility of the silane coupling agent, a three-dimensional network structure formed by the sol-gel reaction forms voids with a relatively even distribution, and silica particles formed by the catalyst for sol-gel reaction in the form of micelles are micro-sized.

In addition, a silanol group Si-OH of the silane precursor or silane coupling agent produced in the hydrolysis of Reaction Equation 1 may bond to the nickel ions or nickel precursor in the first precursor solution to form a Si-O-Ni structure. A bond between an oxygen element and a nickel element is understood as a covalent bond, and the nickel metal bonded to oxygen may act as a seed in a subsequent process of precipitation and growth of the nickel metal.

Therefore, in a formed silica solution, silica particles of a three-dimensional network structure are formed, and fine voids are formed in the micro-sized silica particles.

When the silica solution is maintained at about 80 °C for about 12 hours, water is removed, and silica gel is formed (S300). In the silica gel, nickel may be bonded as Si-O-Ni, and may be randomly distributed in the network structure of silica.

Thereafter, a second precursor solution is added dropwise to the silica gel to form a nickel-silica solution (S400). The second precursor solution has a higher nickel precursor concentration than the first precursor solution. The second precursor solution uses water as a solvent and uses Ni(NO₃)₂·6H₂O as a nickel precursor. Particularly, the second precursor solution may have a higher nickel concentration than the concentration of nickel distributed in the silica gel, and nickel ions migrate into the silica gel.

As the second precursor solution is added dropwise, the silica gel changes to a sol state, and due to the difference in solubility, the nickel metal is agglomerated and precipitated in the nickel-silica solution. That is, the nickel ions and the like distributed in the silica gel change from a gel state to a sol state when the second precursor solution having a higher nickel concentration is added dropwise, and in order to maintain uniform solubility of nickel in the sol state, nickel in the silica gel is precipitated as particles in the silica. However, the agglomeration and the precipitation occur in voids or pores in the three-dimensional network structure of the silica particles, and may bond to the silanol group Si-OH of the silane precursor or silane coupling agent to form a Si-O-Ni bond, and may be aggregated or precipitated on a Si-O-Ni bond, which is already formed in the silica solution, to form single crystals or polycrystals of the nickel metal.

However, since the silanol group or the like may remain in the precursor solution, an oxygen atom may be bonded to the agglomerated or precipitated nickel metal to internally form a Ni-O bond.

In addition, when the nickel metal is precipitated, oleic acid, which is the catalyst for sol-gel reaction, acts as a control factor for controlling the growth of the precipitated nickel metal. Therefore, the size of the nickel metal precipitated may be controlled by controlling the concentration or input amount of the oleic acid.

Through the above-described process, nickel nanoparticles with chemical bonds such as covalent bonds are formed in the silica having a three-dimensional network structure.

Thereafter, water, which is the solvent, is evaporated or dried from the nickel-silica solution to obtain a powder phase, and the powder is fired at about 600 °C to about 900 °C in an atmospheric atmosphere to obtain a dry reforming catalyst (S500). The formed dry reforming catalyst has a powder phase, and in the silica particles of a three-dimensional network structure, nickel atoms of the nickel nanoparticles or nickel atoms of nickel oxide nanoparticles form covalent bonds with oxygen atoms of the silica particles. In addition, some of the nickel particles may be oxidized through firing in an atmospheric atmosphere, and nickel oxide may be formed by the oxidation. This is a variable that may vary depending on the time of the firing process and the type of atmosphere gas, so that the catalyst particles produced in the present invention correspond to nickel or nickel oxide.

### Preparation Example 1

2 mmol of oleic acid, which is a catalyst for sol-gel reaction, and 0.2094 g (0.7 mmol) of Ni(NO)₃)₂·6H₂O, which is a nickel precursor, are mixed to form a preliminary precursor solution. The preliminary precursor solution is stirred at 200 °C for 2 minutes to dissolve the nickel precursor. Thereafter, 70 ml of deionized water is supplied to the preliminary precursor solution, and stirred for 3 minutes. During the supplying and stirring of the deionized water, the preliminary precursor solution is heated to 80 °C in a bath. Through this, a first precursor solution is formed. The formed first precursor solution has a form in which green fine droplets or micelles are dispersed in the deionized water. Nickel ions or the nickel precursor is dispersed in the micelles.

Subsequently, 7.35 g (35 mmol) of TEOS is used as a silane precursor, and 1.341 g (6 mmol) of APTES is used as a silane coupling agent to form a silane precursor solution. The formed silane precursor solution is added to the first precursor solution, and a silica solution is formed. In the silica solution, the synthesis of silica having a network structure is observed with a cloudy white color. The silica solution is stirred in a bath of 80 °C for 12 hours, and is formed into silica gel.

Thereafter, a second precursor solution is added dropwise to the silica gel. The second precursor solution is formed by mixing 0.419 g (1.4 mmol) of Ni(NO)₃)₂·6H₂O to 6 ml of deionized water. The second precursor solution is stirred in a bath of 80 °C for 12 hours while being added dropwise. Thereafter, a powder phase is obtained through a drying process. The formed powder phase is fired at 800 °C to prepare a dry reforming catalyst.

### Comparative Preparation Example 1

Commercially available fumed silica was purchased. Thereafter, 2.4 g of the purchased silica is immersed in a Ni(NO)₃)₂·6H₂O solution, and the amount of a precursor solution is adjusted to correspond to 10 wt% of nickel. After the immersion, the mixture is fired at 800 °C to coat nickel or nickel oxide on silica of a network structure.

### Comparative Preparation Example 2

A powder phase was formed using the same process as in Preparation Example 1 above, but oleic acid, which is the catalyst for sol-gel reaction, was not added.

### Comparative Preparation Example 3

A powder phase was formed using the same process as in Preparation Example 1 above, but the addition of TEOS, which is the silane precursor, was omitted.

### Comparative Preparation Example 4

A powder phase was formed using the same process as in Preparation Example 1 above, but the addition of APTES, which is the silane coupling agent, was omitted.

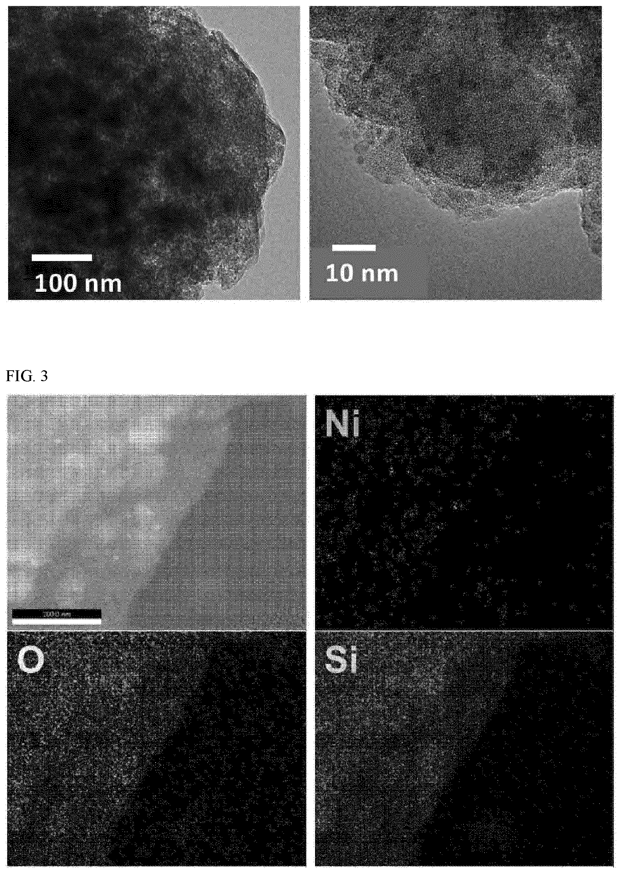

FIG. 2 are images illustrating a dry reforming catalyst according to Preparation Example 1 of the present invention.

Referring to FIG. 2, in the image using a scale bar of 200 nm, the formation of silica of a three-dimensional network is confirmed. In addition, it has been confirmed that nickel or nickel oxide was formed in voids in the network structure of the silica. The dark spherical image shows that nickel or nickel or nickel oxide is formed in the three-dimensional network structure, and is not displayed as a clear image since the nickel or nickel oxide was formed inside the silica. However, in the image using a 10 nm scale bar, the formation of nickel or nickel oxide in silica voids of a three-dimensional network structure is confirmed. The formed nickel or nickel oxide has a roughly spherical shape, and is confirmed to be evenly distributed inside the silica.

FIG. 3 is a TEM image and an EDX image of the dry reforming catalyst according to Preparation Example 1 of the present invention.

Referring to FIG. 3, the presence of nickel, oxygen, and silicon in the dry reforming catalyst is confirmed. Particularly, the oxygen and the silicon are distributed in large quantities, and are assumed to form silica. In addition, it can be seen from the distribution of the nickel and the oxygen that the nickel is present as a metal or in the form of nickel oxide.

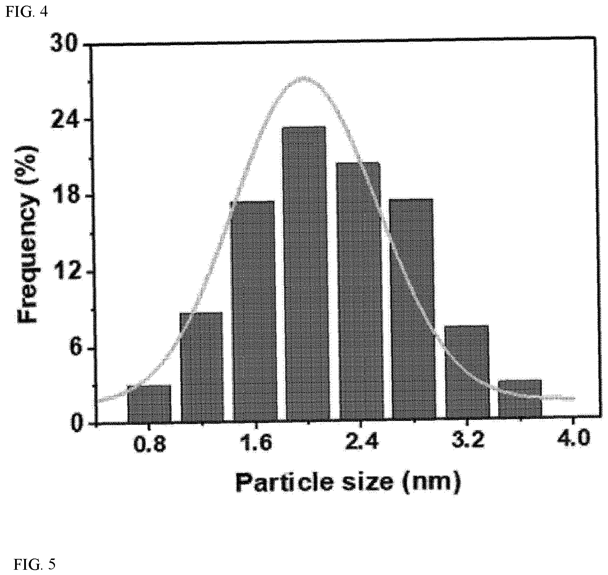

FIG. 4 is a distribution diagram illustrating the size of nickel or nickel oxide in the dry reforming catalyst disclosed in FIG. 2.

Referring to FIG. 4, the spherical nickel or nickel oxide has an average size of 2 nm, and has a size distribution of 0.8 nm to 3.6 nm. The distribution curve has an aspect of a normal distribution.

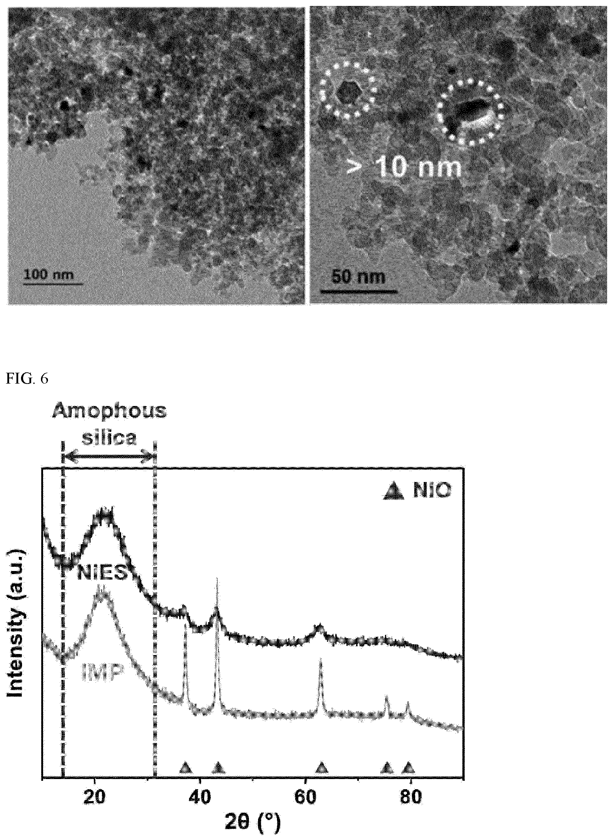

FIG. 5 are images showing a powder phase of Comparative Preparation Example 1.

Referring to FIG. 5, it is confirmed that crystals of the nickel or nickel oxide are formed in large sizes on the surface of the silica. That is, precipitates having a size of 10 nm or greater are shown in a coated form on the surface of the silica.

When compared this to FIG. 2 above, it is confirmed that while the dry reforming catalyst of the present invention is evenly distributed in the network structure of the silica, and is formed in a form filling the voids in the network structure, the dry reforming catalyst of FIG. 5 is present in a planar phase on the surface of the silica.

FIG. 6 is a graph illustrating XRD patterns of dry reforming catalysts according to Preparation Example 1 and Comparative Preparation Example 1 of the present invention.

Referring to FIG. 6, the dry reforming catalyst of Preparation Example 1 is marked as NiES, and the dry reforming catalyst of Comparative Example 1 is marked as IMP. It is confirmed that the catalyst of Preparation Example 1 has an intensity of a peak corresponding to nickel oxide lower than that of Comparative Preparation Example 1. This is interpreted as an even distribution of the nickel oxide in the silica. Also, it is presumed that the nickel metal is not observed on the XRD graph due to the very small size of the nickel metal.

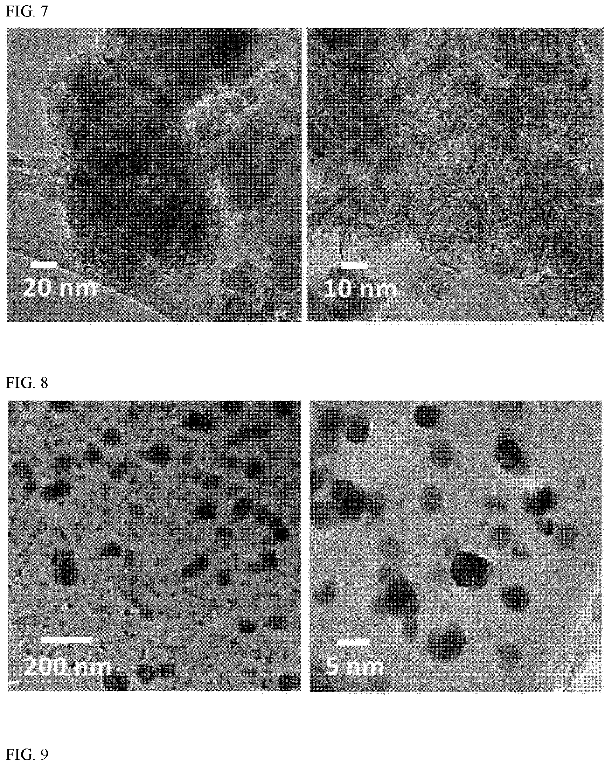

FIG. 7 are images illustrating a powder phase of Comparative Preparation Example 2.

Referring to FIG. 7, the synthesis of silica is not observed on a powder phase in which oleic acid is not added, and a needle-shaped unidentified object is observed. This is due to a phenomenon in which a sol-gel reaction is not smoothly induced when oleic acid is not added since the oleic acid acts as a catalyst for sol-gel reaction for silica formation.

FIG. 8 are images illustrating a powder phase of Comparative Preparation Example 3.

Referring to FIG. 8, the network structure of silica is not observed on a powder phase in which TEOS, which is the silica precursor, is not added. In addition, it can be seen that some silica is formed at a very low concentration or density, and nickel or nickel oxide is irregularly formed in a plate shape. The formed plate-shaped particles have a relatively large size.

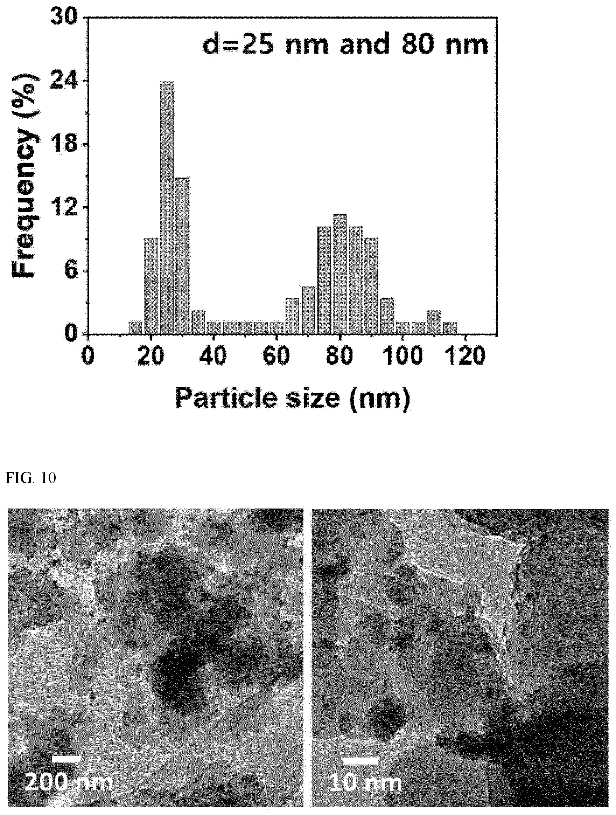

FIG. 9 is a graph illustrating the size distribution of nickel or nickel oxide in the powder phase disclosed in FIG. 8.

Referring to FIG. 9, the size distribution of the particles does not show a normal distribution, but shows an irregular pattern. Particularly, it can be seen that the average particle size is significantly increased compared to that of FIG. 4, and the average particle size is distributed at 25 nm and 80 nm. That is, approximately two or more normal distributions appear irregularly. This means that silica of a network structure is not formed only by a silane coupling agent when a silica precursor is not used. However, some incomplete silica may be formed by the alkoxy group of the silane coupling agent, and particles which are not dense and have a large variation in size are formed inside the silica or on the surface of the silica.

FIG. 10 are images illustrating a powder phase of Comparative Preparation Example 4.

Referring to FIG. 10, in powder in which APTES, which is the silane coupling agent, is not added, the silica itself has a very irregular pattern. In addition, the distribution of pores inside the silica or pores inside the network structure is also nonuniform. Therefore, it can be seen that the shape and size of the nickel or nickel oxide formed on the silica are also irregular.

This is because the compatibility of silica synthesized in the absence of a silane coupling agent is degraded, and a covalent bond between an oxygen element of silica and nickel metal is not smoothly formed.

### Measurement Example 1

The gas reforming performance of the dry reforming catalyst prepared according to Preparation Example 1 of the present invention and the dry reforming catalyst prepared according to Comparative Preparation Example 1 of the present invention is examined. The feed gases are CO₂ and CH₄, and the process temperature is 500 °C to 850 °C. The analysis is conducted by increasing the process temperature by 10 °C per minute and analyzed for 1.5 hours. A conversion rate according to each temperature is measured. The gas hourly space velocity (GHSV) of the feed gases is 250 L·g_{cat}·h⁻¹.

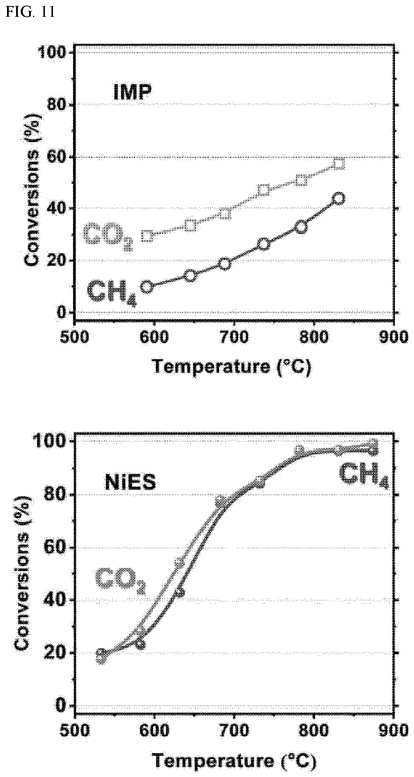

FIG. 11 are graphs showing the measurement of conversion rates of Preparation Example 1 and Comparative Preparation Example 1 according to Measurement Example 1 of the present invention.

Referring to FIG. 11, IMP indicates the use of the dry reforming catalyst of Comparative Preparation Example 1, and NiES indicates the use of the dry reforming catalyst of Preparation Example 1.

In the case of Comparative Preparation Example 1, the conversion rate increases as the process temperature is raised. However, when the temperature is raised to 850 °C, the maximum conversion rate is less than 60%. Also, the conversion rate for CO₂ is higher than the conversion rate for CH₄. A dry reforming reaction of methane is described by the following Reaction Equation 4.

[Reaction Equation 4] CH₄ + CO₂ → 2H₂ + 2CO

In Reaction Equation 4 above, the conversion rate for CO₂ and the conversion rate for CH₄ should be the same in a normal reaction, but when the IMP is used as a dry reforming catalyst, it can be seen that CO₂ is rapidly converted from the feed gases. It is presumed that a significant amount of CO₂ is lost by another reaction without going through Reaction Equation 4 due to other unexplained side reactions.

In the case of using the NiES of Preparation Example 1 as a dry reforming catalyst, the conversion rate increases as the process temperature is raised. A very high conversion rate is observed compared to that of the IMP, and a conversion rate of 80% or greater is shown for CO₂ and CH₄ at 750 °C or higher. This value is a value increased by 30% or greater compared to that of the IMP. In addition, almost the same conversion rate is shown for CO₂ and CH₄. This shows that the NiES dry reforming catalyst undergoes Reaction Equation 4 when other side reactions are minimized. Particularly, it is confirmed that the difference in conversion rate between CO₂ and CH₄ is less than 10% at 700°C or higher.

### Measurement Example 2

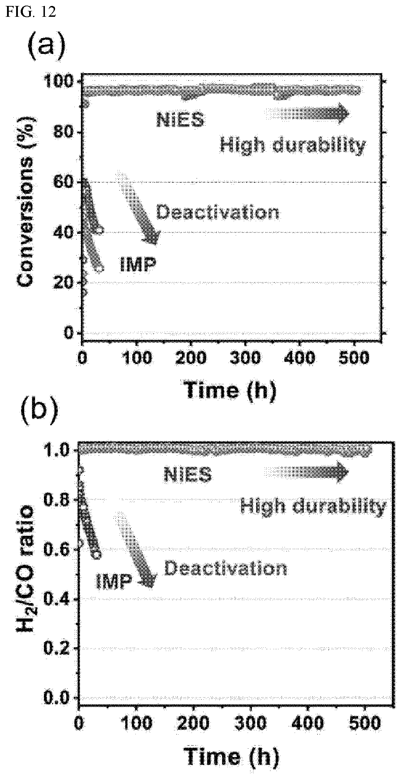

FIG. 12 are graphs illustrating the results of a long-term stability test of a dry reforming catalyst according to Measurement Example 2 of the present invention.

Referring to FIG. 12, the long-term stability of the dry reforming catalyst prepared according to Preparation Example 1 of the present invention and the dry reforming catalyst prepared according to Comparative Preparation Example 1 of the present invention is tested. The feed gases are CO₂ and CH₄, and the process temperature is 800 °C. The gas hourly space velocity (GHSV) of the feed gases is 250 L·g_{cat}·h⁻¹. Under the above conditions, the conversion rate up to 500 hours and the ratio of CO and H₂, which are products, are measured.

First, in the graph (a) of FIG. 12, the blue color represents the conversion rate for CO₂, and the red color represents the conversion rate for CH₄. The dry reforming catalyst of the present invention shows a conversion rate of 90% or greater even up to 500 hours. However, the IMP dry reforming catalyst of Comparative Preparation Example 1 shows a phenomenon in which the conversion rate for CO₂ is higher than the conversion rate for CH₄, and as time elapses, fails to perform as a catalyst and enters a deactivated state due to catalyst poisoning or the like. Particularly, after about 50 hours, no CO₂ and CH₄ were converted or reformed.

In addition, referring to the graph (b) of FIG. 12, the molar ratio of CO and H₂ is measured. The NiES dry reforming catalyst of the present invention shows H₂/CO of about 0.95 or greater, which is close to 1, up to 500 hours. However, the IMP dry reforming catalyst in which the nickel or nickel oxide is coated on the silica showed a decrease in H₂/CO over time, and no reforming operation was performed after 50 hours or more.

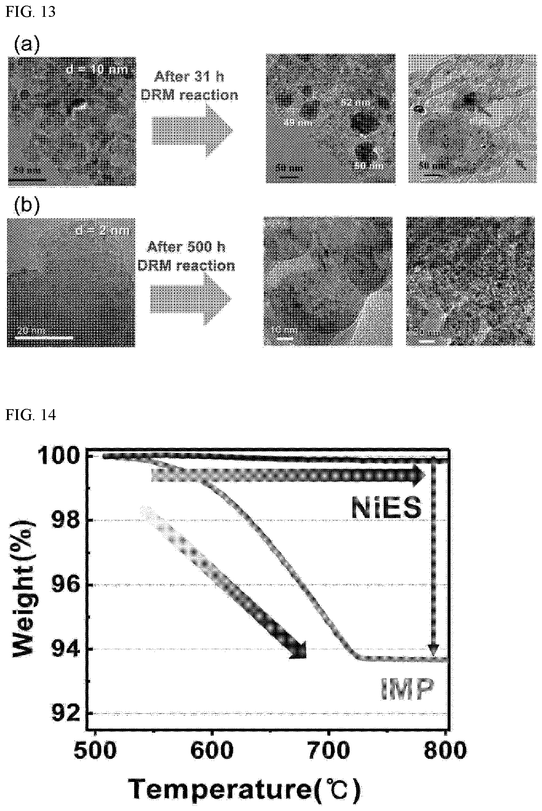

FIG. 13 are TEM images illustrating the results of a long-term stability test of a dry reforming catalyst according to Measurement Example 2 of the present invention.

Referring to the image (a) of FIG. 13, in the image of the IMP dry reforming catalyst before being introduced into the reforming process, it is confirmed that the nickel or nickel oxide is coated in a plate shape on the silica structure. In addition, it is confirmed that after the dry reforming of methane (DRM) was performed for 31 hours under the conditions of FIG. 12, particles of the nickel or nickel oxide moved on the silica surface and agglomerated with each other, resulting in increasing the size of the particles. In addition, on the far right side, it is confirmed that carbon is deposited on the top of the catalyst particles due to a high-temperature process of 800 °C, thereby blocking active sites of the catalyst. Through this, a phenomenon is observed in which active sites of a typical IMP dry reforming catalyst are blocked by a long-term reforming reaction, and the area of the active site of the catalyst is reduced according to co-agglomeration of the catalyst particles.

Referring to the image (b) of FIG. 13, it is confirmed that the dry reforming catalyst of the present invention prepared according to Preparation Example 1 has catalyst nanoparticles evenly dispersed in an internal space of silica of a network structure. In addition, looking at the images taken after the dry reforming of methane was performed at 800 °C for 500 hours, it can be confirmed that even though the reaction was a high-temperature process, there was no agglomeration of the catalyst particles caused by the particle diffusion or agglomeration, and the deactivation of the catalyst caused by carbon deposition did not proceed.

The above effect is due to the fact that the catalyst nanoparticles of the present invention form covalent bonds between oxygen elements and nickel inside silica of a three-dimensional network structure, which are formed in internal pores or voids.

### Measurement Example 3

FIG. 14 is a graph illustrating the result of thermogravimetric analysis of a dry reforming catalyst according to Measurement Example 3 of the present invention.

Referring to FIG. 14, the dry reforming catalyst NiES of Preparation Example 1 shows no weight loss even when the temperature is raised to 800 °C. That is, it shows that even at a high process temperature, the catalyst particles do not separate from the silica or decompose during the agglomeration process. In addition, thermal decomposition due to deposition of carbon is not observed.

However, in the dry reforming catalyst IMP of Comparative Preparation Example 1, a continuous weight loss is observed at a process temperature of 500 °C or higher. It is presumed that the nickel or nickel oxide is not evaporated or thermally decomposed at the above temperature. Nevertheless, it is presumed that the weight loss occurs because the catalyst particles formed on the silica surface are separated or removed from the silica surface as the catalyst particles formed on the silica surface coarsen. In addition, no further weight loss occurs at a process temperature of about 720 °C or higher, which is due to the completion of coarsening by agglomeration of the catalyst particles on the silica surface, and the formation of stabilized inactive sites, in which no more active sites are present, by the deposition of carbon on the surface of the catalyst particles.

Through the above-described measurement examples, it is confirmed that the dry reforming catalyst of the present invention has the catalyst particles of nickel or nickel oxide formed inside pores of silica having a three-dimensional network structure. Nickel atoms of the catalyst particles form covalent bonds with oxygen atoms of the silica, and the catalyst particles are formed in pores inside the silica, and moves to other pores, so that the catalyst particles are not coarsened. Particularly, silica having a network structure formed by the preparation method of the present invention may have pores having a predetermined size and uniformly distributed thereinside. This is due to the fact that the catalyst for sol-gel reaction is formed as fine droplets or micelles in the first precursor solution. That is, catalysts for sol-gel reaction are separated from each other into micelles and have a relatively uniform size, so that sol-gel reactions for the formation of silica are also performed with mutual uniformity centered on the micelles. Therefore, the catalyst particles formed in silica pores of a network structure may be formed in a uniform distribution to the inside of silica, and long-term stability may be secured without agglomeration or poisoning of the catalyst particles even in a reforming reaction.

Table 1 below shows the measured values of the surface area, pore volume, and average pore diameter of the silicas provided in Preparation Example 1 and Comparative Preparation Examples.

**[Table 1]**

| Silica types | Surface area (m²/g) | Pore volume (cm³/g) | Average pore diameter (nm) |
|---|---|---|---|
| Preparation Example 1 | 544 | 1.027 | 6 |
| Comparative Preparation Example 1 | 212 | 1.127 | 21 |
| Comparative Preparation Example 2 | 264 | 61 | 11 |
| Comparative Preparation Example 3 | 51 | 12 | 4 |
| Comparative Preparation Example 4 | 770 | 9 | 45 |

In Table 1 above, the silica of Comparative Preparation Example 4 shows a very high surface area. This is due to the fact that the above silica, which is silica of a case in which a silane coupling agent is not added, has degraded compatibility with the silane precursor or the catalyst for sol-gel reaction, and thus, is not evenly mixed therewith in the sol-gel reaction of silica, and the sol-gel reaction was performed only with the silane precursor. Therefore, the silica of Comparative Preparation Example 4 also showed the largest average pore diameter.

Looking at the pore volume, Comparative Preparation Example 2 shows the largest value. A catalyst for sol-gel reaction is not used in Comparative Preparation Example 2, so that silica of a network structure for accommodating a catalyst is not properly formed. Therefore, silica of a dense structure is not observed, and silica having a very large pore volume is shown.

The silica of the present invention has a nano-sized average pore diameter, and has a very small pore volume. That is, nano-sized pores are formed, and the pores have a volume of a very small value, so that a phenomenon is prevented in which the catalyst particles formed in the pores are diffused or agglomerated at a high temperature. In addition, due to the large surface area, a large amount of nano-sized active sites are generated, ensuring the performance and long-term stability of the catalyst.

In addition, it is confirmed that the catalyst particles of the present invention have an average diameter smaller than that of the pores as the catalyst particles are formed inside the pores. This is due to the intervention of oleic acid, which controls the size of nickel metal in the precipitation of the nickel metal, or the contraction of the nickel metal in the final firing process. Particularly, oleic acid, which is the catalyst for sol-gel reaction and acts as the growth control factor of nickel metal, is capable of controlling the size of the nickel metal in a precipitation operation of the nickel metal according to the input amount or concentration. Therefore, if necessary, the catalyst particles may fill the pores of the silica, and may be formed inside the pores with a smaller diameter than the pores. Particularly, the catalyst particles formed with a smaller diameter than the pores increase a contact area with a feed gas required to be converted inside the pores, and have ensured long-term stability.

In the present invention described above, a nickel or nickel oxide catalyst used in a dry reforming reaction of methane is disclosed. Catalyst particles are also formed inside silica, and are formed in nano-sized pores. In a synthesis process, nickel atoms supplied from a precursor are covalently bonded to oxygen atoms of silica produced through a sol-gel reaction. In addition, in a subsequent process, nickel is precipitated in a covalent bond site of nickel-oxygen by the difference in solubility. In addition, when a firing process is performed, the nickel metal may be partially oxidized on the surface, forming the catalyst particles of nickel or nickel oxide. The catalyst particles are formed inside the silica having a relatively high density and a predetermined pore size. Since the formed the catalyst particles have a smaller size than the pores, a predetermined separation space is formed between the pores and the catalyst particles. Therefore, a contact area between the methane gas and the catalyst particles may be increased, long-term stability may be secured in the dry reforming reaction of methane, and a high conversion rate may be maintained.

## Claims

1. A dry reforming catalyst comprising:
silica having a three-dimensional network structure with pores formed therein; and
catalyst particles for reforming methane, which are formed in the pores and have a smaller diameter than the pores.

2. The dry reforming catalyst of claim 1, wherein the catalyst particles comprising nickel or nickel oxide.

3. The dry reforming catalyst of claim 2, wherein nickel atoms of the catalyst particles form covalent bonds with oxygen atoms of the silica.

4. The dry reforming catalyst of claim 3, wherein the catalyst particles are formed by precipitation using the nickel-oxygen covalent bonds as a seed for growth.

5. The dry reforming catalyst of claim 1, wherein the catalyst particles are **characterized by** having a particle size controlled by oleic acid.

6. The dry reforming catalyst of claim 1, wherein the dry reforming catalyst has a conversion rate of 80% or greater for CO₂ and CH₄ at 750 °C or higher.

7. The dry reforming catalyst of claim 6, wherein the dry reforming catalyst has a difference of less than 10% in conversion rate between CO₂ and CH₄ at 700 °C or higher.

8. The dry reforming catalyst of claim 1, wherein the dry reforming catalyst has a conversion rate of 90% or greater for up to 500 hours under the conditions that the feed gas is CO₂ and CH₄, the process temperature is 800 °C, and the gas hourly space velocity of the feed gas is 250 L·g_{cat}·h⁻¹.

9. The dry reforming catalyst of claim 8, wherein the dry reforming catalyst maintains an H₂/CO ratio of 0.95 or greater for up to 500 hours.

10. A method for preparing a dry reforming catalyst, the method comprising:
preparing a first precursor solution in which a catalyst for sol-gel reaction, a nickel precursor, and water are mixed, and the catalyst for sol-gel reaction floats in the form of drops or micelles;
adding a silane precursor solution to the first precursor solution to form a silica solution in which silica particles of a network structure are formed;
removing water from the silica solution to form silica gel; and
adding a second precursor solution dropwise to the silica gel to form a nickel-silica solution in which nickel particles are formed in the silica particles of a network structure.

11. The method of claim 10, wherein the catalyst for sol-gel reaction comprises oleic acid.

12. The method of claim 10, wherein the preparing of the first precursor solution comprises:
mixing the catalyst for sol-gel reaction and the nickel precursor to form a preliminary precursor solution; and
mixing the water with the preliminary precursor solution to form drops or micelles of the catalyst for sol-gel reaction floating in the water.

13. The method of claim 10, wherein the silane precursor solution comprises a silane precursor and a silane coupling agent.

14. The method of claim 13, wherein the silane precursor or the silane coupling agent forms the silica particles of a network structure by a sol-gel reaction at the interface of the catalyst for sol-gel reaction in the form of micelles.

15. The method of claim 14, wherein a silanol group produced by hydrolysis of the silane precursor or the silane coupling agent combines with nickel ions or the nickel precursor of the first precursor solution to form a Si-O-Ni structure, and a covalent bond between an oxygen element and a nickel element acts as a seed for the growth of the nickel particles.

16. The method of claim 10, wherein the second precursor solution is obtained by dissolving the nickel precursor in water and has a nickel concentration lower than the nickel concentration in the silica gel.

17. The method of claim 10, wherein the second precursor solution is obtained by dissolving the nickel precursor in water and has a nickel concentration higher than the nickel concentration of the first precursor solution.

18. The method of claim 10, wherein the catalyst for sol-gel reaction controls the size of the nickel particles when the nickel particles are formed.

19. The method of claim 10, further comprising:
after the forming of the nickel-silica solution,
evaporating and drying water of the nickel-silica solution to obtain powder; and
firing the powder at 600 °C to 900 °C in an atmospheric atmosphere.

20. The method of claim 19, wherein at least some of the nickel particles are formed into nickel oxide through the firing.
